# EUROPEAN PATENT APPLICATION

(11) **EP 4 383 480 A1**
(43) Date of publication of application: **12.06.2024**
(21) Application number: 22211660.0
(22) Date of filing: 06.12.2022
(51) Int. Cl.: H01R 27/02, B60D 1/64, H01R 24/20

(54) **A COMBINED PLUG-SOCKET CONNECTOR SYSTEM**

(71) Applicant: KNORR-BREMSE Systeme für Nutzfahrzeuge GmbH, 80809 München (DE)
(72) Inventor: SKRIBA, Daniel, 1015 Budapest (HU); NEMETH, Huba, 1116 Budapest (HU); KONYA, Tamas, 7030 Paks (HU); MLINÁRCSEK, Csaba, 80809 München (DE)

(57) **Abstract**

A combined connector plug (100) for a connection between a towing vehicle (10) and a trailer (20) is disclosed. The combined connector plug (100) comprises: a first connector plug portion (110) configured to connect a first connector socket portion (210) and to provide a first power supply and low-speed communication link between the towing vehicle (10) and the trailer (20); and a second connector plug portion (120) configured to connect a second connector socket portion (220) and to provide a second power supply and a high-speed communication link between the towing vehicle (10) and the trailer (20), the high-speed communication link providing a transmission rate that is higher than the low-speed communication link, wherein the first connector plug portion (110) is configured to connect the first connector socket portion (210) even if the second connector plug portion (120) is not connected to the second connector socket portion (220).

## Description

The present invention relates to a combined connector plug and a combined connector socket which, together with a connector cable, form a combined plug-socket connector system and, in particular to a combined truck-trailer connector.

Wired communication interfaces (e.g. physical layer, data link layer) are widely used communication interfaces between towing vehicles (e.g. road vehicles, truck) and towed vehicles (e.g. trailer, multiple trailers). The wired communication interfaces interchange digital information on electrical connections between towing vehicles and towed vehicles.

Especially with the rise of autonomous vehicles, the need emerges to reliably transmit significantly more digital information. To support these increased digital information transfer, new communication systems emerge, for example advanced wired communication interfaces or wireless communication interfaces.

As the majority of the automotive development goes into electronics nowadays, there is a growing need for more electric power and more data bandwidth for truck-trailer links. Due to the increased electric power and data bandwidth, the communication interfaces of the towing vehicle is preferred to be backward compatible with the communication interfaces of the trailer and vice versa.

The combined charging systems, CCS, as for charging electric vehicles of all types, are conventional or legacy charging systems, where the charging cable connectors of an AC charging connector is extended with a DC charging connector.

Conventional technologies specify the parameters and messages for electronically controlled braking systems, including anti-lock braking system, ABS, electronic braking system, EBS, and for running gear equipment (i.e. systems for steering, suspension and tires), to ensure the interchange of digital information and communication between towing vehicles and trailers. However, the theoretical usable data rate for most combination is limited to 125 kbit and contains only standardized messages. Therefore, a new communication interface should either use the existing messages or add additional electric connections to the already existing connections (e.g. electronic braking system, lighting).

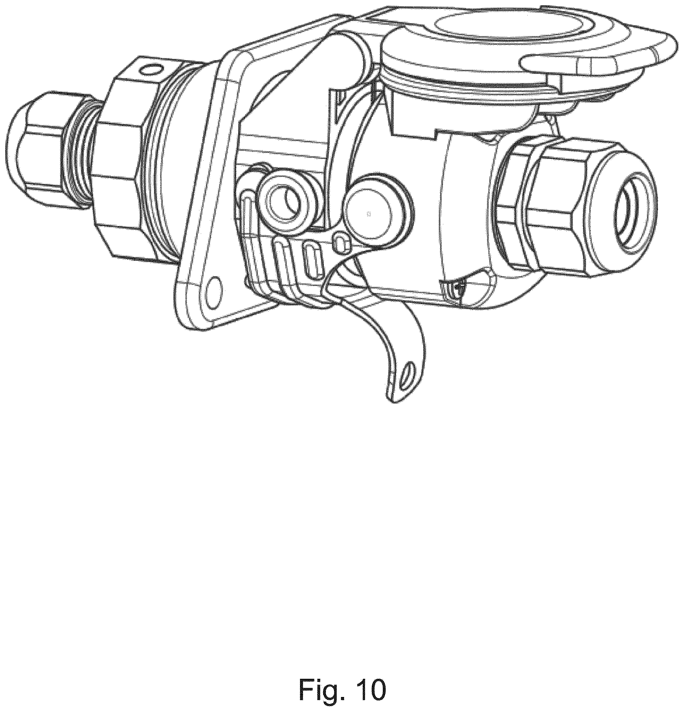

For example, **Fig. 10** shows a conventional plug-socket connection system according to a prior art. The conventional or legacy connector sockets are fixed to a towing vehicle or to a trailer. The conventional or legacy connector plugs are connected for example with a spiral connector cable.

Known systems are not able or barley able to use a second 125 kbit controller area network line, CAN, which has also a limited added data rate of a theoretically 250 kbit at system level, and this limit has been widely recognized by the original equipment manufacturers, OEMs, and their suppliers.

Therefore, there is a demand for a system which is able to connect electrically and mechanically the communication interfaces of the towing vehicle and the trailer with backward compatible connectors. The backward compatible connector makes the transition to a new connector seamless for all actors (end users, fleets, OEMs, suppliers) and extends with redundant high-speed communication and redundant power supply links.

At least some of the problems as described before are overcome by a combined connector plug of claim 1 and a combined connector socket of claim 6, or a combined plug-socket connector system according to claim 11. The dependent claims refer to further advantageous realizations of the subject matter of the independent claims.

The present invention relates to a combined connector plug for a connection between a towing vehicle and a trailer. The combined connector plug comprises a first connector plug portion configured to connect a first connector socket portion and to provide a first power supply and low-speed communication link between the towing vehicle and the trailer. The combined connector plug further comprises a second connector plug portion configured to connect a second connector socket portion and to provide a second power supply and a high-speed communication link between the towing vehicle and the trailer, the high-speed communication link providing a transmission rate that is higher than the low-speed communication link, wherein the first connector plug portion is configured to connect the first connector socket portion even if the second connector plug portion is not connected to the second connector socket portion.

Optionally, the second connector plug portion may include at least one of the following:
- a second plug body, having a front end and a rear end;
- a recess mounted on the front end of the second plug body, the recess having electrical terminals and/or data terminals and/or auxiliary terminals located inside the recess;
- a deepening arranged so that the recess is between the deepening and the first plug portion;
- a first receiving surface on the front end of the second plug body to allow a protective cover to cover the first receiving surface on the front end of the second plug body, the protective cover being a cover of socket which has only a first connector socket portion;
- a second receiving surface on the rear end of the second plug body;
- a coaxial cable connector or a twisted pair connector to enable the high-speed communication link for data rates of more than 1 Mbit per second or more than 100 Mbit per second.

The first receiving surface may allow a protective cover of a legacy socket (i.e. a socket comprising only first connector socket portion allowing only a low speed communication) to cover the first receiving surface at the front end of the second plug body.

The recess at the front end of the second plug body may be oval-shaped and may include a flat attachment portion and a rim. At least one of the data terminals may provide a digital communication line. In addition, another terminal may be present for analog signals such as sensor signals. The front end can be defined as the end on which the plug connection will be established. The rear end is then the end opposite thereto.

Optionally, the deepening on the second connector plug portion of the combined connector plug may be configured to collect moisture and to prevent moisture to enter the recess.

Optionally, the first connector plug portion of the combined connector plug may include at least one of the following:
- a first plug body with a front end and a rear end;
- a recess mounted at the front end of the first plug body, the recess having a plurality of electrical terminals and/or data terminals and/or auxiliary terminals;
- an anti-twist protection at the bottom of the recess configured to allow the connection of the first connector plug portion only in one angular position;
- a cable mounting portion arranged on the rear end of the first plug body to mount a cable to the first connector plug portion;
- mounting elements on the first plug body;
- a first locking portion mounted on the rear end of the first plug body of the first connector plug portion with the mounting elements, the first locking portion being configured to securely fix the first connector socket portion.

For example, the plurality of electrical terminals and/or data terminals and/or auxiliary terminals inside the recess may be arranged in a circle. The anti-twist protection may be configured to allow a connection of the first connector plug portion only in one angular position (e.g. by a protrusion that will be received by a slot only the plug and socket are orientationally correctly aligned). The first locking portion may be configured to securely fix the first connector socket portion to the first connector plug portion.

The recess at the front end of the first plug body may be round-shaped and may include a flat attachment portion and a rim. Furthermore, the first plug body may be tubular in form. The front end of the first plug body can be defined as the end on which the plug connection will be established. The rear end is then the end opposite thereto.

Optionally, the first connector plug portion and the second connector plug portion are spaced from each other and comprise each a separate moisture protection to enable a connection of the first connector plug portion with a cable that comprises only a first connector socket portion.

This provides the advantage that first connector plug portion can be connected to a legacy cable (having only the first connector socket portion).

The present invention relates also to a combined connector socket for connection between a towing vehicle and a trailer. The combined connector socket comprises a first connector socket portion configured to connect a first connector plug portion and to provide a first power supply and low-speed communication link between the towing vehicle and the trailer.

The combined connector socket further comprises a second connector socket portion configured to connect a second connector plug portion and to provide a second power supply and a high-speed communication link between the towing vehicle and the trailer, the high-speed communication link providing a transmission rate that is higher than the low-speed communication link, wherein the first connector socket portion is configured to connect the first connector plug portion even if the second connector socket portion is not connected to the second connector plug portion.

Optionally, the first connector socket portion of the combined connector socket may include at least one of the following:
- a first socket body with a front end and a rear end;
- a recess mounted on the front end of the first socket body, the recess having electrical terminals and/or data terminals and/or auxiliary terminals located inside the recess;
- an anti-twist protection to allow the connection of the first connector socket portion only in one angular position;
- a feeding line attachment portion configured to attach a feeding line to the first socket body;
- mounting elements arranged on the first socket body of the first connector socket portion and/or on second socket body of the second connector socket portion to enable a hooking of a first locking portion or a second locking portion;
- a first protective cover adapted to cover the first connector socket portion;
- a mounting of the first protective cover to the first socket body.

The anti-twist protection may be configured to allow a connection of the first connector socket portion to first connector plug portion only in one angular position (i.e. ensure correct contacting of the contacts/terminals). The mounting elements may be adapted to enable a hook-like engagement (e.g. formed as a protruding pin that can hooked by hook).

Furthermore, the recess at the front end of the first socket body may be round-shaped and the first socket body may be tubular in form. The first socket body may further comprise a rim and a flat attachment portion. The front end of the first socket body can be defined as the end on which the socket connection will be established. The rear end is then the end opposite thereto.

Optionally, the second connector socket portion of the combined connector socket may further include at least one of the following:
- a second socket body with a front end and a rear end;
- a recess, mounted on the front end of the second socket body, the recess having electrical terminals and/or data terminals and/or auxiliary terminals located inside the recess, wherein at least one of the data terminals is a digital communication line;
- a second protective cover adapted to cover the second connector socket portion;
- a connecting part between the second protective cover and the first protective cover to secure the second protective cover to the first protective cover;
- a coaxial cable socket connector or a twisted pair socket connector to enable the high-speed communication link for data rates of more than 1 Mbit per second or more than 100 Mbit per second.

For example, the connecting part may be a hinge to rotatably connect the first protective cover to the second protective cover. Furthermore, the second socket body may be rectangular in form. The recess of the second socket body may be oval-shaped. The second socket body may further comprise a rim and a flat attachment portion. The front end of the second socket body can be defined as the end on which the socket connection will be established. The rear end is then the end opposite thereto.

At least one of the data terminals may provide a digital communication line. In addition, another terminal may be present for analog signals such as sensor signals.

Moreover, the second socket body may further include auxiliary terminals, for example fault indicator, visual indicator. The connecting part between the second protective cover and the first protective cover may be a hinge connection.

The present invention relates also to a connector cable that is including a cable with plurality of lines and/or wires. The connector cable comprises two combined connector plugs formed at opposite ends of the cable to enable a connection between the towing vehicle and the trailer.

Optionally, the plurality of lines or wires of the connector cable may provide the high-speed communication link, include one or more of the following: a shielded wire, a shielded twisted pair, a coaxial cable, a twinaxial cable.

The high-speed communication link may transport date faster and support higher transmission rates between the towing vehicle and the trailer that the low-speed communication link. Moreover, the high-speed communication link may enable data rates of more than 1 Mbit per second or more than 100 Mbit per second.

The present invention relates also to a combined plug-socket connector system for connecting a towing vehicle with a trailer. The combined plug-socket connector system comprises at least one combined connector plug and at least one combined connector socket.

According to further embodiment, the towing vehicle and the trailer comprise each a respective combined connector socket. The system may then comprise a connector cable having a combined connector socket (as described before) on each end. However, according to embodiments, the trailer and the towing vehicle can also be connected utilizing legacy cables. Then, however, the high-speed data communication between the trailer and the towing vehicle is not possible.

Optionally, the combined plug-socket connector system further comprises the second protective cover that is adapted to cover the second receiving surface on the rear end of the second plug body of the combined connector plug.

The compatibility of the combined plug-socket connector system may be a backward compatibility and may at least one of the following:
- an electric backward compatibility,
- a mechanical backward compatibility.

It is understood that the electric backward compatibility refers to conventional electric signals with backward compatible electric requirement that are also supported by the combined plug-socket connector system.

It is understood that the mechanical backward compatibility refers to the conventional or legacy mechanical interfaces with backward compatible mechanical requirement are also supported by the combined plug-socket connector system. With other words, the full mechanical backwards compatibility means that the conventional connector plug fits into the combined connector socket and the conventional connector socket fits into the combined connector plug as well. Moreover, the sealing and other environmental requirements are still satisfied even in a mixed conventional-combined system.

In the combined plug-socket connector system the transmitted information may be (digital) data, analog signals, electric power, or a combination thereof.

It is understood that the towing vehicle or the trailer is not part of the claimed combined plug socket connector system. The combined plug socket connector system is, however, mountable on the towing vehicle and/or on the trailer.

The present invention relates further to a high-speed communication connector, which extends the functionality of the conventional or legacy connector with additional redundant power and redundant communication lines (e.g. shielded wires, shielded twisted pairs, coaxial cables, twinaxial cables).

When compared to conventional or legacy connector systems, embodiments of the present invention provide the following advantages. Such high-speed communication connections would be suitable for data speed above 100 Mbps. Moreover, further auxiliary terminals can be added to the second connector socket portion of the combined connector socket, for example pilot lines.

Currently there is no combined plug-socket connector system for a connection between a towing vehicle and a trailer that is able to transfer high-speed data and in the same time is backward compatible with the conventional plug connector and/or conventional socket connector. Therefore, embodiments of the present invention can particularly be used for such towing vehicle-trailer connector systems where high-speed data transfer is required.

Some examples of the plug connectors, socket connectors and the combined plug-socket connector system will be described in the following by way of examples only, and with respect to the accompanying figures, in which:
- Fig. 1: shows a combined plug connector according to an embodiment of the present invention;
- Fig. 2: shows a combined socket connector according to another embodiment of the present invention;
- Fig. 3: shows the second connector socket portion of the combined plug connector according to another embodiment of the present invention;
- Fig. 4: shows a connector cable with combined plug connectors;
- Fig. 5: illustrates a schematic view of a combined plug connector according to an embodiment of the present invention;
- Fig. 6: shows a combined connector plug attached to a conventional connector socket according to an embodiment of the invention;
- Fig. 7: shows a conventional connector plug attached to a combined connector socket according to an embodiment of the invention;
- Fig. 8: shows a combined connector plug attached to a combined connector socket according to an embodiment of the invention;
- Fig. 9: depicts a pinning layout of a first connector plug portion.
- Fig. 10: shows a conventional plug-socket connection system according to a prior art; and

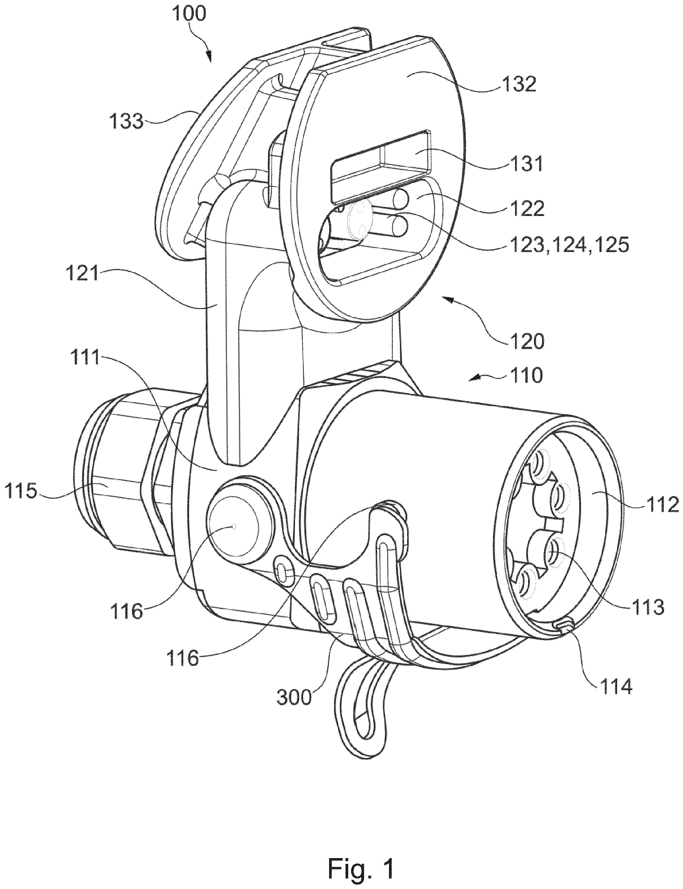

**Fig. 1** shows a combined connector plug 100 for a connection between a towing vehicle 10 and a trailer 20 according to an embodiment of the present invention. The combined connector plug 100 comprises a first connector plug portion 110 and a second connector plug portion 120. The first connector plug portion 110 may be configured to connect a first connector socket portion 210 (not shown) and to provide a first power supply and low-speed communication link between the towing vehicle 10 and the trailer 20. The second connector plug portion 120 may be configured to connect a second connector socket portion 220 (not shown) and to provide a second power supply and a high-speed communication link between the towing vehicle 10 and the trailer 20, the high-speed communication link providing a transmission rate that is higher than the low-speed communication link, wherein the first connector plug portion 110 may be configured to connect the first connector socket portion 210 even if the second connector plug portion 120 is not connected to the second connector socket portion 220.

**Fig. 1** further shows the first connector plug portion 110 in details. The first connector plug portion 110 includes a first plug body 111 with a front end and a rear end. A recess 112 may be mounted on the front end of the first plug body 111, and the recess 112 may have a plurality of electrical terminals and/or data terminals and/or auxiliary terminals 113. An anti-twist protection 114 may be located at the bottom of the recess 112, and the anti-twist protection 114 may be configured to allow the connection of the first connector plug portion 110 only in one angular position.

A cable mounting portion 115 may be arranged on the rear end of the first plug body 111 to mount a cable to the first connector plug portion 110.

Furthermore, a first locking portion 300 may be mounted on the rear end of the first plug body 111 of the first connector plug portion 110 with the mounting elements 116, so that the locking portion 300 may be configured to securely fix the first connector socket portion 210 (not shown).

For example, mounting elements 116 may be located on the first plug body 111 and with the mounting elements 116 a first locking portion 300 may be mounted on the first plug body 111 of the first connector plug portion 110.

The second connector plug portion 120 may include a second plug body 121 having a front end and a rear end. A recess 122 may be mounted on the front end of the second plug body 121 and the recess 122 having electrical terminals 123 and/or data terminals 124 and/or auxiliary terminals 125. The terminals 123, 124, 125 may be located inside the recess 122. A deepening 131 may be arranged so that the recess 122 is between the deepening 131 and the first plug portion 110.

The deepening 131 may be configured to collect moisture and to prevent moisture to enter the recess 122. Moreover, the deepening 131 may also collect particulate matter (e.g. dirt, dust, soot, smoke, drops of liquid). Other contaminants may also be accumulated in the deepening 131 that come into contact with the combined connector plug 100 during operation or storage.

Furthermore, a first receiving surface 132 may be located on the front end of the second plug body 121 to allow a protective cover to cover the first receiving surface 132 on the front end of the second plug body 121. The protective cover may be a cover of conventional socket which has only a first connector socket portion. A second receiving surface 133 may be located on the rear end of the second plug body 121.

A coaxial cable connector or a twisted pair connector may enable the high-speed communication link for data rates of more than 1 Mbit per second or more than 100 Mbit per second.

The first connector plug portion 110 and the second connector plug portion 120 are spaced from each other and comprise each a separate moisture protection to enable a connection of the first connector plug portion 110 with a legacy cable 40 that comprises only a first connector socket portion.

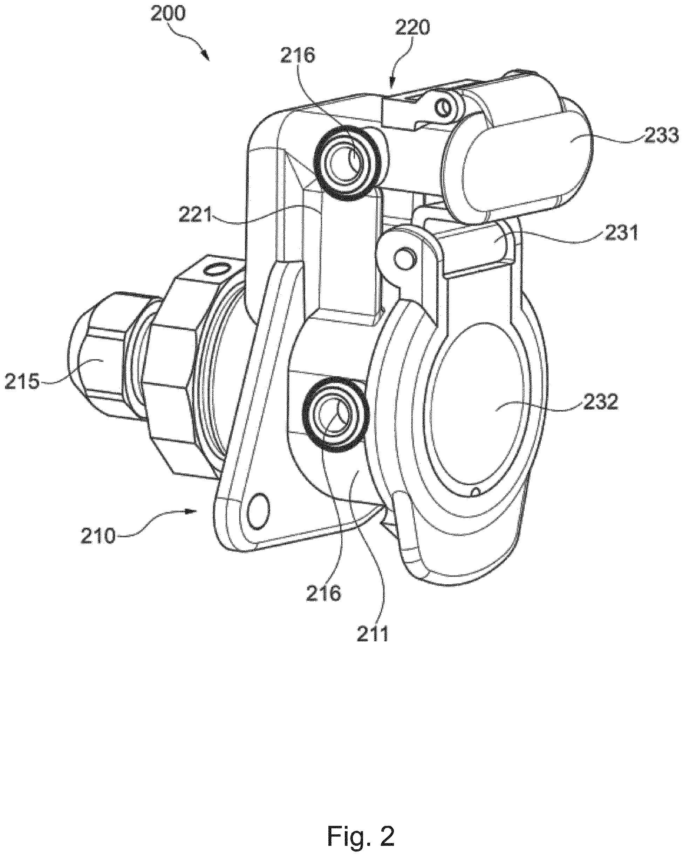

**Fig. 2** shows a combined connector socket 200 for connection between a towing vehicle 10 and a trailer 20. The combined connector socket 200 comprises a first connector socket portion 210 and a second connector socket portion 220. The first connector socket portion 210 may be configured to connect a first connector plug portion 110 (not shown) and to provide a first power supply and low-speed communication link between the towing vehicle 10 and the trailer 20. The second connector socket portion 220 may be configured to connect a second connector plug portion 120 (not shown) and to provide a second power supply and a high-speed communication link between the towing vehicle 10 and the trailer 20. The high-speed communication link may provide a transmission rate that is higher than the low-speed communication link.

Furthermore, the first connector socket portion 210 may be configured to connect the first connector plug portion 110 (not shown) even if the second connector socket portion 220 is not connected to the second connector plug portion 120 (no shown).

The first connector socket portion 210 may further comprising a first socket body 211 with a front end and a rear end. A recess may be mounted on the front end of the first socket body 211 and the recess may has electrical terminals and/or data terminals and/or auxiliary terminals. The electrical terminals and/or data terminals and/or auxiliary terminals may be located inside the recess. An anti-twist protection may be configured to allow the connection of the first connector socket portion 210 only in one angular position. A feeding line attachment portion 215 may be configured to attach a feeding line to the first socket body 211.

Mounting elements 216 may be arranged on the first socket body 211 of the first connector socket portion 210 to enable a hooking of a first locking portion 300. Mounting elements 216 may also be arranged on second socket body 221 of the second connector socket portion 220 to enable a hooking of a second locking portion.

Furthermore, a second locking portion may be mounted on the rear end of the second plug body 121 of the second connector plug portion 120 with the mounting elements 116, so that the second locking portion may be configured to securely fix also the second connector socket portion 210.

For example, mounting elements 116 may be located on the second plug body 121 and with the mounting elements 116 a second locking portion may be mounted on the second plug body 121 of the second connector plug portion 120.

A coaxial cable socket connector or a twisted pair socket connector may enable the high-speed communication link for data rates of more than 1 Mbit per second or more than 100 Mbit per second.

A first protective cover 232 may be adapted to cover the first connector socket portion 210 and a mounting of the first protective cover 232 to the first socket body 211.

A second protective cover 233 may be adapted to cover the second connector socket portion 220. A connecting part 231 between the second protective cover 233 and the first protective cover 232 may be configured to secure the second protective cover 233 to the first protective cover 232.

**Fig. 2** further shows a first protective cover 232 that is mounted to the combined connector socket 200. The first protective cover 232 is adapted to do at least one of the following:
- to cover the recess of first connector socket portion 210;
- to cover the first receiving surface 132 on the front end of the second plug body 121 (not shown);
- to cover the second receiving surface 133 on the rear end of the second plug body 121 (not shown);
- to cover any conventional receiving surface on a plug body.

The second protective cover 233 is also mounted to the combined connector socket 200. The second protective cover 233 is adapted to do at least one of the following:
- to cover the recess 222 of second connector socket portion 220;
- to cover the second receiving surface 133 on the rear end of the second plug body 121 (not shown).

A connecting part 231 is located between the second protective cover 233 and the first protective cover 232. The connecting part 231 between the first protective cover 232 and the second protective cover 233 may be a hinge connection. The hinge connection is hinged via a mechanism such as a pin shaft to be relatively movable and rotatable.

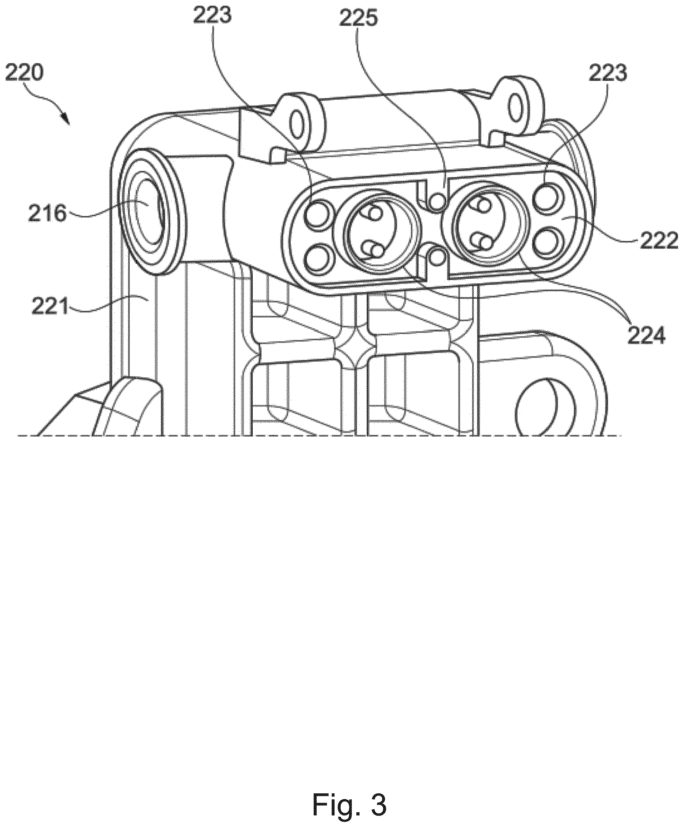

**Fig. 3** shows the second connector socket portion 220 of the combined connector socket 200. The second connector socket portion 220 may include a second socket body 221 with a front end and a rear end. A recess 222 may be mounted on the front end of the second socket body 221. The recess 222 may has electrical terminals 223 and/or data terminals 224 and/or auxiliary terminals 225. The electrical terminals 223 and/or data terminals 224 and/or auxiliary terminals may be located inside the recess 222. For example, at least one of the data terminals 224 is a digital communication line.

In addition, further terminals, for example auxiliary terminals 225 may be present for pilot lines, analog signals such as sensor signals, or other indicators, for example fault indicator, visual indicator.

The high-speed communication link extends the functionality of the conventional or legacy connector with additional redundant power and redundant communication lines (e.g. shielded wires, shielded twisted pairs, coaxial cables, twinaxial cables). Such high-speed communication link may be suitable for data speed above 100 Mbps.

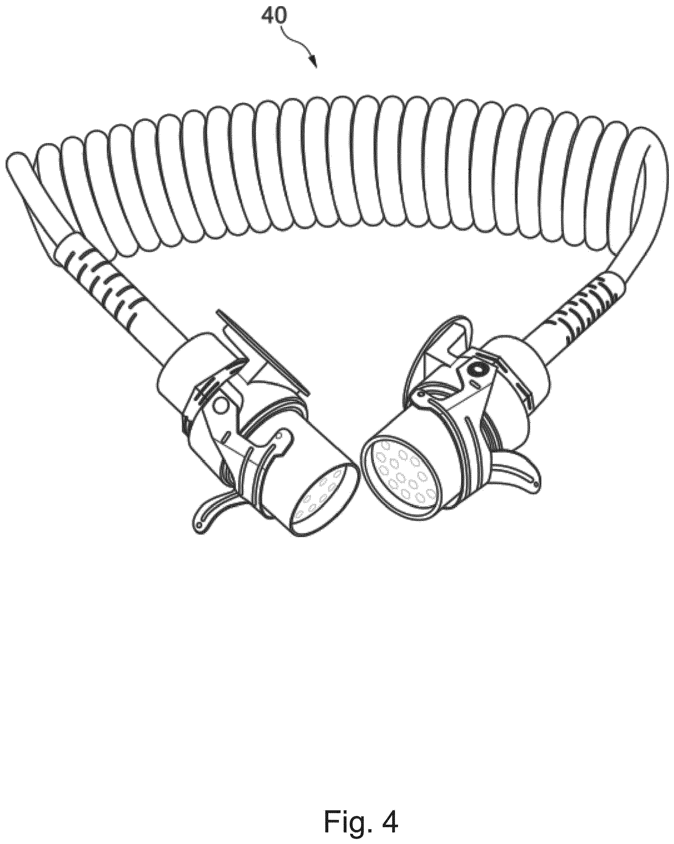

**Fig. 4** shows a legacy cable 40 with connector plugs at both ends. The connection between the towing vehicle 10 and the trailer 20 may be realized with a legacy cable using conventional plug connectors or combined plug connectors 100 that are suitable for connecting ABS/EBS systems. The legacy cable 40 is for example a spiral cable.

The length of spiral cables may typically be 4.5 - 6 m. For example, the maximum length of the spiral cable is 7 m. The legacy cable 40 may include a cable with a plurality of lines and/or wires.

For example two combined connector plugs 100 formed at opposite ends of the plurality of the cable to provide the connection between the towing vehicle 10 and the trailer 20. Moreover, the plurality of lines or wires is configured to provide the high-speed communication link, include one or more of the following: as shielded wire, a shielded twisted pair, a coaxial cable, a twinaxial cable.

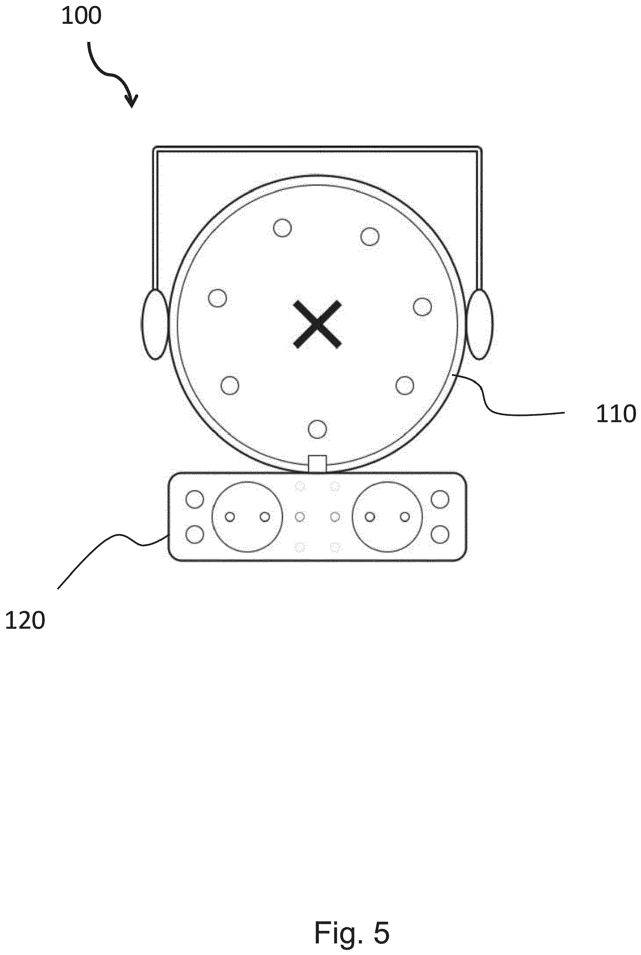

**Fig. 5** illustrates a schematic view of a combined connector plug 100 with a first connector plug portion 110 and a second connector plug portion 120. The first connector plug portion 110 can be for example a conventional plug connector. The second connector plug portion 120 can be for example a high-speed communication connector. The conventional plug connector can be extended with the high-speed communication connector, and the combined connector plug 100 may be backward compatible.

In the combined plug-socket connector system, the position of the first connector plug portion 110 and the second connector plug portion 120 may be interchangeable, and the second connector plug portion 120 is detachable. For example, the second connector plug portion 120 such as high-speed communication connector portion can be used later in the future as a separate connector when the backward compatibility is not anymore required.

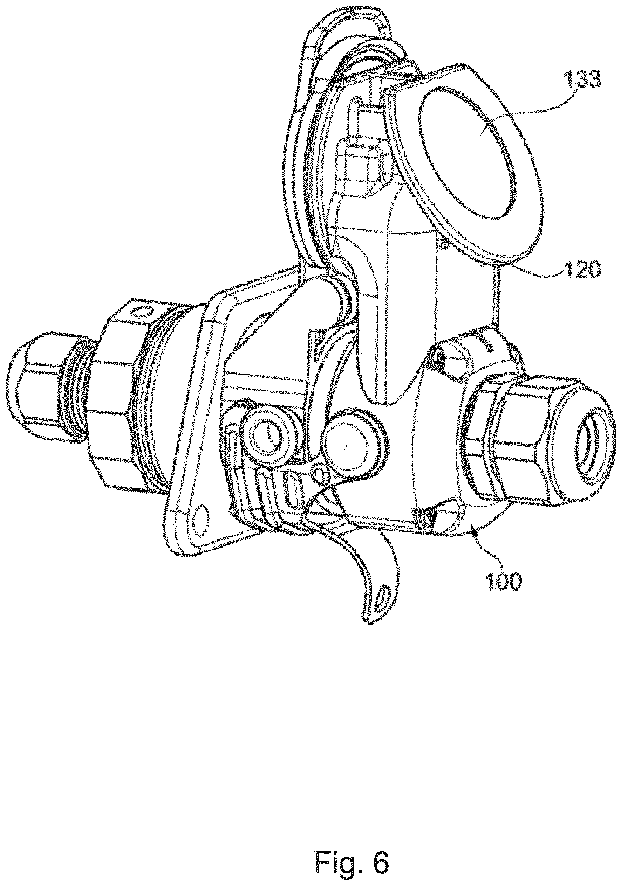

**Fig. 6** shows a combined connector plug 100 attached to a conventional connector socket according to an embodiment of the invention. For example, the combined connector plug 100 is backward compatible with the conventional connector socket.

A backward compatibility is also known as backward connection, downward connection, or downward compatibility. The backward compatibility may refer to the combined plug-socket connector system that can successfully use terminals, communication interfaces and data from the conventional plug connector system and/or the conventional socket connector system, such as at least one of the following:
- the electrical terminals 123 of the combined connector plug 100;
- data terminals 124 of the combined connector plug 100;
- auxiliary terminals 125 of the combined connector plug 100;
- electrical terminals 223 of the combined connector socket 200;
- data terminals 224 of the combined connector socket 200;
- auxiliary terminals 225 of the combined connector socket 200.

Thus, backward compatibility of the combined plug-socket connector system may support the combination of the following systems:
- conventional connector socket on the towing vehicle - combined connector plug;
- conventional connector socket on the trailer - combined connector plug;
- combined connector socket on the towing vehicle - conventional connector plug;
- combined connector socket on the trailer - conventional connector plug;
- combined connector socket on the towing vehicle - combined connector plug;
- combined connector socket on the trailer - combined connector plug.

The second connector plug portion 120 of the combined connector plug 100 in the present plug-socket combination is not in use. However, the second connector plug portion 120 is protected and covered by the protective cover of the conventional connector socket. In this case, the high-speed communication link is also protected against contamination. The second receiving surface 133 of the second connector plug portion 120 of the combined connector plug 100 in the present plug-socket combination is uncovered.

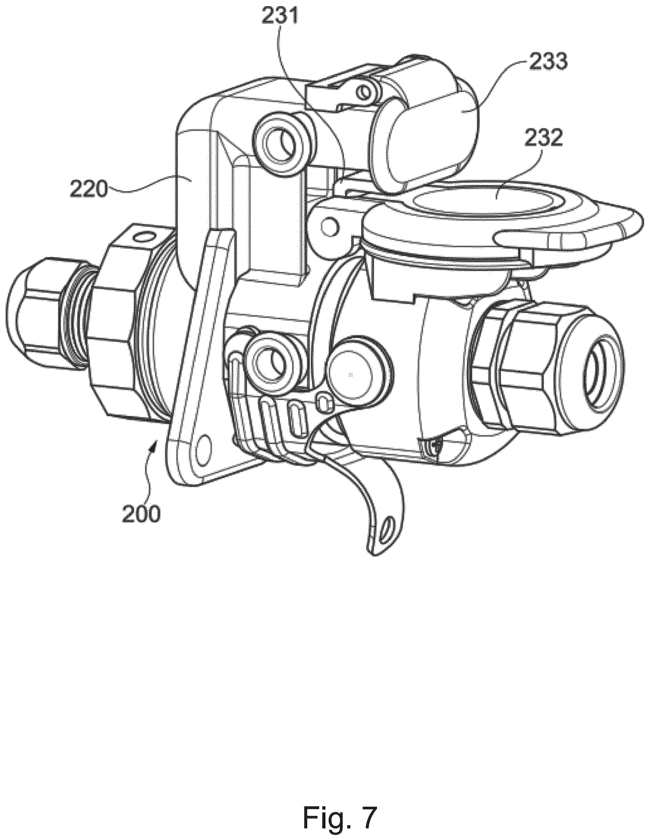

**Fig. 7** shows a conventional connector plug attached to a combined connector socket 200 according to an embodiment of the invention. The first protective cover 232 may be adapted to selectively cover the receiving surface of the conventional connector plug. The second protective cover 233 is adapted to selectively cover the second connector socket portion 220 of the combined connector socket 200.

The second connector socket portion 220 of the combined connector socket 200 in the present plug-socket combination is not in use. However, the recess 222 on the second socket body 221 is covered and protected against moisture, dirt, and dust by its own protective cover 233.

Therefore, the high-speed communication link is protected against contamination. The receiving surface of the socket portion of the conventional connector socket in the present plug-socket combination is also covered by the first protective cover 232 of the second connector socket portion 220. In this case the combined connector socket 200 may be mounted on the towing vehicle 10 or on the trailer 20.

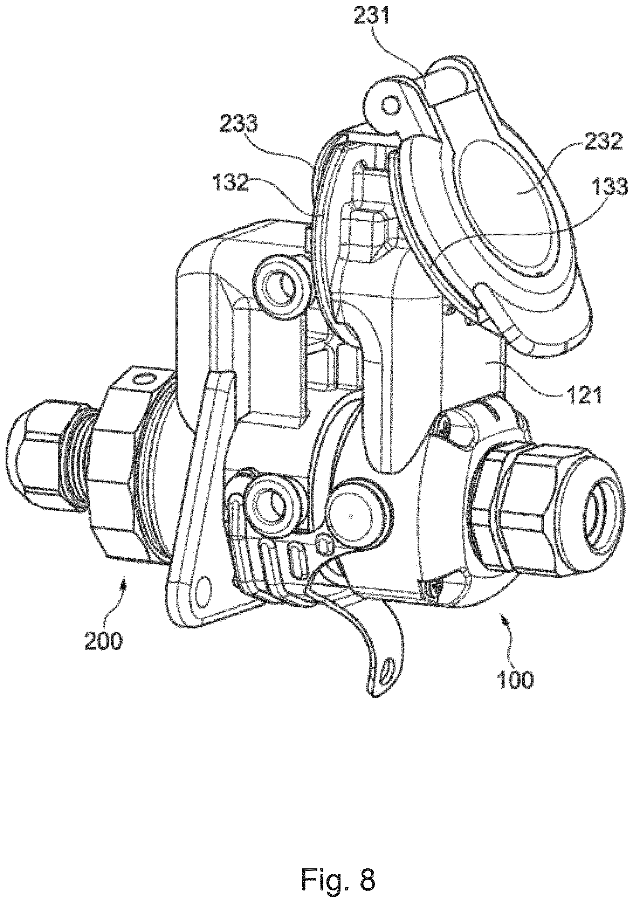

**Fig. 8** shows a combined connector plug 100 attached to a combined connector socket 200 according to an embodiment of the invention. In the present combined plug-socket connector system, the first protective cover 232 may be adapted to selectively cover the second receiving surface 133 on the rear end of the second plug body 121 of the combined connector plug 100. The second protective cover 233 may also be adapted to selectively cover the first receiving surface 132 on the front end of the second plug body 121 of the combined connector plug 100. The second protective cover 233 may protect the high-speed communication link against contamination (e.g. moisture, dirt, dust).

The connecting part 231 may be adapted to rotatably connect the first protective cover 232 and the second protective cover 233 (not show from this perspective).

Moreover, in the combined plug-socket connector system, the speed of the transmitted data transmitted between the data terminals 124 of the second connector plug portion 120 and the data terminals 224 of the second connector socket portion 220 is at least 1 Mbps (Megabits per second) or more than 50 Mbps or more than 100 Mbps or above.

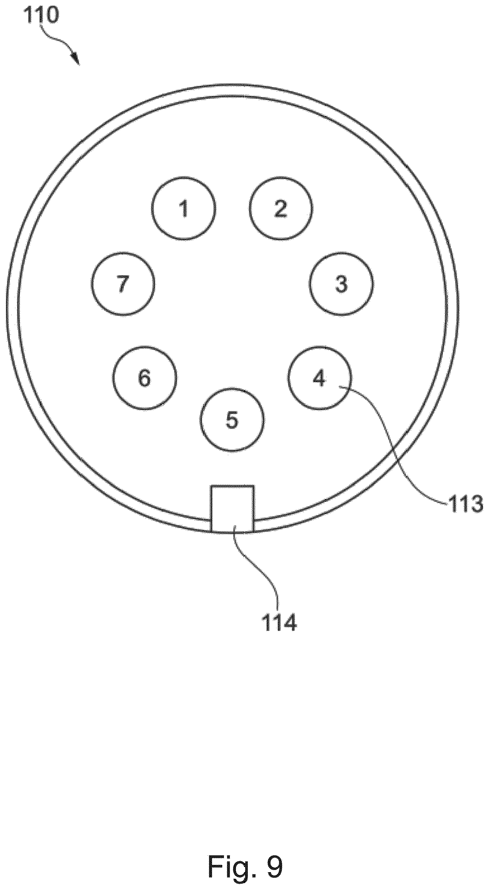

**Fig. 9** depicts a pinning layout of the first connector plug portion 110. The pinning layout can be a conventional pinning layout with conventional terminal arrangement having seven electrical terminals and/or data terminals and/or auxiliary terminals 113 and an anti-twist protection 114.

Table 1 presents the conventional pinning distribution and the corresponding signal and designated color.

**Table 1. Conventional pinning distribution.**

| **#** | **DIN** | **Signal** | **Color** | **Cross-sectional size of the wire** | |
|---|---|---|---|---|---|
| | | | | **mm²** | **AWG** |
| **1** | 30 | +24V permanent for control valves | Red | 4 | 11 |
| **2** | 15 | +24V via ignition lock for electronics | Black | 1.5 | 15 |
| **3** | 31 | Ground for electronics (Pin 2) | Yellow | 1.5 | 15 |
| **4** | 31 | Ground for control valves (Pin 1) | Brown | 4 | 11 |
| **5** | n/a | ABS Fault indication | White | 1.5 | 15 |
| **6** | n/a | CAN H, For EBS and ABS | Green/White | 1.5 | 15 |
| **7** | n/a | CAN L, For EBS and ABS | Brown/White | 1.5 | 15 |

**Table 1** also presents the cross-sectional size of a wire and the equivalent size cross references between metric and American wire sizes (American wire gauge, AWG). In Europe, wire and cable sizes are expressed in cross sectional area in mm², and also as the number of strands of wires of a diameter expressed in mm. In America, the commonest system is the AWG numbering scheme, where the numbers are applied not only to individual strands but also to equivalent size bunches of smaller strands. For example, the signals can also relate to messages, such as brake lights, left or right flasher, left or right hand side light, earth, fog light, etc.

The description and drawings merely illustrate the principles of the disclosure. It will thus be appreciated that those skilled in the art will be able to devise various arrangements that, although not explicitly described or shown herein, embody the principles of the disclosure and are included within its scope.

Furthermore, while each embodiment may stand on its own as a separate example, it is to be noted that in other embodiments the defined features can be combined differently, i.e. a particular feature descripted in one embodiment may also be realized in other embodiments. Such combinations are covered by the disclosure herein unless it is stated that a specific combination is not intended.

### LIST OF REFERENCE SIGNS

- 10: towing vehicle
- 20: trailer
- 40: legacy cable
- 100: combined connector plug
- 110: first connector plug portion
- 111: first plug body
- 112: recess
- 113: electrical terminals and/or data terminals and/or auxiliary terminals
- 114: anti-twist protection
- 115: cable mounting portion
- 116: mounting elements
- 120: second connector plug portion
- 121: second plug body
- 122: recess
- 123: electrical terminals
- 124: data terminals
- 125: auxiliary terminals
- 131: deepening
- 132: first receiving surface
- 133: second receiving surface
- 200: combined connector socket
- 210: first connector socket portion
- 211: first socket body
- 215: feeding line attachment portion
- 216: mounting elements
- 220: second connector socket portion
- 221: second socket body
- 222: recess
- 223: electrical terminals
- 224: data terminals
- 225: auxiliary terminals
- 231: connecting part
- 232: first protective cover
- 233: second protective cover
- 300: first locking portion

## Claims

1. A combined connector plug (100) for a connection between a towing vehicle (10) and a trailer (20),
**characterized by:**
- a first connector plug portion (110) configured to connect a first connector socket portion (210) and to provide a first power supply and low-speed communication link between the towing vehicle (10) and the trailer (20); and
- a second connector plug portion (120) configured to connect a second connector socket portion (220) and to provide a second power supply and a high-speed communication link between the towing vehicle (10) and the trailer (20), the high-speed communication link providing a transmission rate that is higher than for the low-speed communication link,
wherein the first connector plug portion (110) is configured to connect the first connector socket portion (210) even if the second connector plug portion (120) is not connected to the second connector socket portion (220).

2. The combined connector plug (100) according to claim 1,
**characterized in that**
the second connector plug portion (120) includes at least one of the following:
- a second plug body (121), having a front end and a rear end;
- a recess (122) mounted on the front end of the second plug body (121), the recess (122) having electrical terminals (123) and/or data terminals (124) and/or auxiliary terminals (125) located inside the recess (122);
- a deepening (131) arranged so that the recess (122) is between the deepening (131) and the first plug portion (110);
- a first receiving surface (132) on the front end of the second plug body (121) to allow a protective cover to cover the first receiving surface (132) on the front end of the second plug body (121), the protective cover being a cover of socket which has only a first connector socket portion;
- a second receiving surface (133) on the rear end of the second plug body (121);
- a coaxial cable connector or a twisted pair connector to enable the high-speed communication link for data rates of more than 1 Mbit per second or more than 100 Mbit per second.

3. The combined connector plug (100) according to claim 2,
**characterized in that**
the deepening (131) is configured to collect moisture and to prevent moisture to enter the recess (122).

4. The combined connector plug (100) according to any one of claims 1 to 3,
**characterized in that**
the first connector plug portion (110) includes at least one of the following:
- a first plug body (111) with a front end and a rear end;
- a recess (112) mounted on the front end of the first plug body (111), the recess (112) having a plurality terminals (113) including electrical terminals and/or at least one data terminal and/or at least one auxiliary terminal;
- an anti-twist protection (114) at the bottom of the recess (112) configured to allow the connection of the first connector plug portion (110) only in one angular position;
- a cable mounting portion (115) arranged on the rear end of the first plug body (111) to mount a cable to the first connector plug portion (110);
- mounting elements (116) on the first plug body (111);
- a first locking portion (300) mounted on the rear end of the first plug body (111) of the first connector plug portion (110) with the mounting elements (116), the locking portion (300) being configured to securely fix a first connector socket portion (210).

5. The combined connector plug (100) according to any one of claims 1 to 4,
**characterized in that**
the first connector plug portion (110) and the second connector plug portion (120) are spaced from each other and comprise each a separate moisture protection to enable a connection of the first connector plug portion (110) with a cable (40) that comprises only a first connector socket portion.

6. A combined connector socket (200) for a connection between a towing vehicle (10) and a trailer (20),
**characterized by**
- a first connector socket portion (210) configured to connect a first connector plug portion (110) and to provide a first power supply and low-speed communication link between the towing vehicle (10) and the trailer (20); and
- a second connector socket portion (220) configured to connect a second connector plug portion (120) and to provide a second power supply and a high-speed communication link between the towing vehicle (10) and the trailer (20), the high-speed communication link providing a transmission rate that is higher than the low-speed communication link,
wherein the first connector socket portion (210) is configured to connect the first connector plug portion (110) even if the second connector socket portion (220) is not connected to the second connector plug portion (120).

7. The combined connector socket (200) according to claim 6,
**characterized by**
a first connector socket portion (210) includes at least one of the following:
- a first socket body (211) with a front end and a rear end;
- a recess mounted on the front end of the first socket body (211), the recess having electrical terminals and/or at least one data terminal and/or at least one auxiliary terminal located inside the recess;
- an anti-twist protection to allow the connection of the first connector socket portion (210) only in one angular position;
- a feeding line attachment portion (215) configured to attach a feeding line to the first socket body (211);
- mounting elements (216) arranged on the first socket body (211) of the first connector socket portion (210) and/or on second socket body (221) of the second connector socket portion (220) to enable a hooking of a first locking portion (300) or a second locking portion;
- a first protective cover (232) adapted to cover the first connector socket portion (210);
- a mounting of the first protective cover (232) to the first socket body (211).

8. The combined connector socket (200) according to claim 6 or claim 7,
**characterized in that**
the second connector socket portion (220) includes at least one of the following:
- a second socket body (221) with a front end and a rear end;
- a recess (222), mounted on the front end of the second socket body (221), the recess (222) having electrical terminals (223) and/or data terminals (224) and/or auxiliary terminals (225) located inside the recess (222), wherein at least one of the data terminals is a digital communication line;
- a second protective cover (233) adapted to cover the second connector socket portion (220);
- a connecting part (231) between the second protective cover (233) and the first protective cover (232) to secure the second protective cover (233) to the first protective cover (232);
- a coaxial cable socket connector or a twisted pair socket connector to enable the high-speed communication link for data rates of more than 1 Mbit per second or more than 100 Mbit per second.

9. A connector cable is including a cable with plurality of lines and/or wires,
**characterized by**
two combined connector plugs (100) according to one any of claims 1 to 6 formed at opposite ends of the cable to enable a connection between the towing vehicle (10) and the trailer (20).

10. The connector cable according to claim 9,
**characterized in that**
the plurality of lines or wires, to provide the high-speed communication link, include one or more of the following: as shielded wire, a shielded twisted pair, a coaxial cable, a twinaxial cable.

11. A combined plug-socket connector system for connecting a towing vehicle (10) with a trailer (20), the combined plug-socket connector system (300) comprises:
- at least one combined connector plug (100) according to any one of claims 1 to 5; and
- at least one combined connector socket (200) according to any one of claims 6 to 8.

12. The combined plug-socket connector system according to claim 11,
**characterized in that**
the second protective cover (233) is adapted to cover the second receiving surface (133) on the rear end of the second plug body (121) of the combined connector plug (100).
